Europäisches Patentamt

European Patent Office

Office européen des brevets

(19)

(11) Numéro de publication: **0 034 100**
**A1**

(12) **DEMANDE DE BREVET EUROPEEN**

(21) Numéro de dépôt: **81400188.9**

(22) Date de dépôt: **06.02.81**

(51) Int. Cl.³: **G 21 C 19/32**

(30) Priorité: **08.02.80 FR 8002862**

(43) Date de publication de la demande: **19.08.81**
**Bulletin 81/33**

(84) Etats contractants désignés: **DE GB IT**

(71) Demandeur: **NOVATOME, 20 Avenue Edouard Herriot,**
**F-92350 Le Plessis Robinson (FR)**

(72) Inventeur: **Allain, Albert, 8 rue des Acacias,**
**F-91680 Bruyeres le Chatel (FR)**
Inventeur: **Thomas, Claude, 41bis rue d'Orgemont,**
**F-95100 Argenteuil (FR)**

(74) Mandataire: **Bouget, Lucien et al,**
**CREUSOT-LOIRE 15 rue Pasquier, F-75383 Paris**
**Cedex 08 (FR)**

(54) **Dispositif de transfert et de stockage d'assemblages combustibles pour réacteurs nucléaires.**

(57) L'invention concerne un dispositif de transfert de stockage d'assemblages combustibles pour réacteurs nucléaires sur un site où se trouvent plusieurs réacteurs et au moins un bâtiment renfermant des installations communes à ces réacteurs.

Le dispositif comporte des modules de transfert et de stockage (44) des assemblages combustibles, un ensemble de voies de circulation (7) des modules entre les réacteurs (1, 2, 3, 4) et les installations communes (5), des dispositifs de manutention des assemblages associés à chacun des réacteurs (1, 2, 3, et 4) et au moins un dispositif de manutention des assemblages neufs placé dans le bâtiment (5) des installations communes.

L'invention s'applique en particulier à un ensemble de réacteurs à neutrons rapides groupés sur un site unique.

1

"Dispositif de transfert et de stockage d'assemblages combustibles pour réacteurs nucléaires"

L'invention concerne un dispositif de transfert et de stockage d'assemblages combustibles pour réacteurs nucléaires sur un site où se trouvent plusieurs réacteurs et au moins un bâtiment renfermant des installations communes à ces réacteurs.

Pour l'implantation des réacteurs nucléaires, on a actuellement tendance à regrouper plusieurs réacteurs sur un même site, quand les conditions locales le permettent. Cette implantation groupée des réacteurs nucléaires a principalement pour intérêt de mettre en commun certaines installations pour desservir l'ensemble des réacteurs situés à proximité, ce qui permet de réaliser des économies quant au coût d'investissement et de fonctionnement des centrales nucléaires.

En particulier, dans le cas des réacteurs à neutrons rapides, cette conception a paru particulièrement avantageuse.

Cependant, jusqu'ici on n'a pas conçu de dispositif de transfert et de stockage du combustible nucléaire, qu'il soit neuf ou irradié, permettant de bénéficier au maximum de cette implantation groupée des réacteurs.

En effet, jusqu'ici, l'évacuation des assemblages irradiés vers les usines de retraitement et le rechargement du réacteur en assemblages neufs ont toujours supposé un ensemble d'opérations de préparation et de conditionnement de l'assemblage effectuées par télémanipulation dans des cellules blindées attenantes au réacteur nucléaire. De telles cellules blindées où sont effectuées les principales opérations doivent être prévues pour chaque réacteur dont on effectue l'exploitation.

Par exemple, l'évacuation d'un assemblage irradié prélevé dans le coeur du réacteur nucléaire vers une usine de retraitement suppose les opérations suivantes : extraction du réacteur, désactivation dans un barillet de stockage, mise en étui de l'assemblage combustible, fermeture de l'étui, insertion de l'étui dans un chateau de transport, transport du chateau par voie ferrée jusqu'à l'usine de retraitement et transfert de l'étui dans une enceinte de stockage dans l'usine de retraitement, après son extraction du chateau de transport.

Dans le cas des réacteurs nucléaires à neutrons rapides, les étuis sont étanches et contiennent du sodium assurant les échanges thermiques entre l'assemblage et l'étui, pour l'évacuation des calories rejetées par l'assemblage vers le milieu extérieur.

Les opérations nécessaires pour le transport du combustible irradié sont donc extrêmement nombreuses et extrêmement complexes et nécessitent des installations spéciales associées au réacteur nucléaire.

De plus, le fait que lechateau de transport doive emprunter des voies de circulation appartenant au domaine public, nécessite une conception très sûre de ce chateau qui en augmente le coût.

Le transport des assemblages neufs, leur conditionnement et leur chargement dans le réacteur ne posent pas de problème technique particulier mais supposent néanmoins des installations spéciales associées à chacun des réacteurs.

Le but de l'invention est donc de proposer un dispositif de transfert et de stockage d'assemblages combustibles pour réacteurs nucléaires à neutrons rapides sur un site où se trouvent au moins deux batiments-réacteurs et au moins un bâtiment renfermant des installations communes à ces deux réacteurs, qui permette de simplifier les opérations d'évacuation des assemblages irradiés et de rechargement en combustible neuf et de réduire le nombre et la complexité des installations spéciales nécessaires pour laréalisation de ces opérations au niveau de chacun des réacteurs.

Dans ce but, le dispositif comporte :

- des modules de transfert et de stockage des assemblages combustibles comportant une enceinte pouvant contenir plusieurs assemblages portée par un véhicule de transport,

- un ensemble de voies de circulation des modules entre les réacteurs et les installations communes,

- des dispositifs de manutention associés à chacun des réacteurs pour faire passer les assemblages irradiés, du réacteur à un module de transfert disposé en position de chargement sur une voie desservant le réacteur et inversement pour faire passer les assemblages neufs depuis un module de transfert vers le réacteur,

- un atelier de démantelement des assemblages dans le bâtiment des installations communes,

et au moins un dispositif de manutention disposé dans le bâtiment des installations communes pour le chargement des modules en assemblagesneufs.

Afin de bien faire comprendre l'invention, on va maintenant décrire à titre d'exemplesnon limitatifs, en se référant aux figures jointes en annexe, plusieurs modes de réalisation d'un dispositif de transfert et de stockage suivant l'invention appliqués au cas d'un site où se trouvent regroupés 2 ou 4 réacteurs nucléaires à neutrons rapides.

La figure 1 représente dans une vue en plan schématique un dispositif de transport et de stockage d'assemblages suivant l'invention, dans le cas d'un site comportant 4 réacteurs nucléaires à neutrons rapides.

La figure 2 représente un second mode de réalisation du dispositif suivant l'invention dans le cas d'un site comportant également 4 réacteurs nucléaires à neutrons rapides.

La figure 3 représente dans une vue schématique en plan, un dispositif suivant l'invention appliqué au cas d'un site comportant deux réacteurs nucléaires à neutrons rapides.

La figure 4 représente dans une vue en coupe par un plan vertical de symétrie, un module de transfert d'assemblages irradiés utilisable dans l'un des dispositifs représentés schématiquement aux figures 1, 2 et 3.

La figure 5 représente dans une vue en coupe par un plan vertical, la partie du bâtiment des installations communes où se trouvent la capacité de stockage et un dispositif de manutention des assemblages irradiés dans cette capacité de stockage.

La figure 6 représente dans une vue en coupe par un plan vertical, le dispositif de manutention des assemblages irradiés depuis la cuve du réacteur jusqu'à un module de transport.

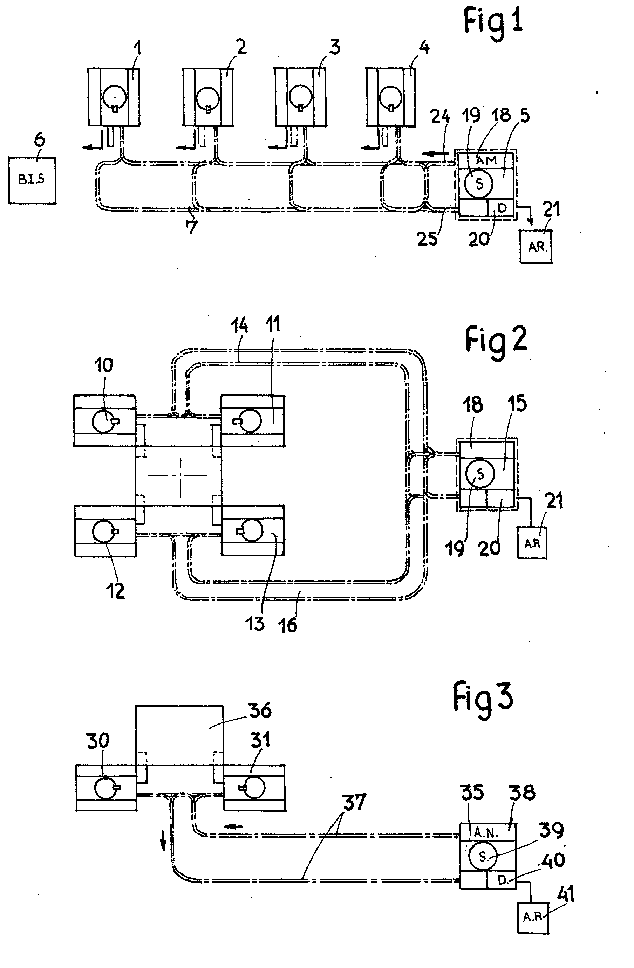

Sur la figure 1, on voit une vue en plan d'un site comportant 4 réacteurs nucléaires à neutrons rapides 1, 2, 3 et 4, un bâtiment des installations communes aux 4 réacteurs 5 et un bâtiment des interventions spéciales sur ces réacteurs 6.

Un réseau de voies 7 permet de joindre chacun des bâtiments réacteurs renfermant les cuves de ces réacteurs au bâtiment 5 des installations communes.

Dans le mode de réalisation représenté à la figure 1, chacun des bâtiments réacteurs est relié indépendamment des autres à un réseau de circulation commun vers le bâtiment 5.

Dans le mode de réalisation représenté à la figure 2, les bâtiments réacteurs 10 et 11 d'une part et 12 et 13 d'autre part sont reliés au bâtiment des installations communes 15 par des réseaux indépendants 14 et 16 respectivement.

Dans les deux cas, le bâtiment des installations communes comporte une partie de stockage et de conditionnement des assemblages neufs 18, une capacité de stockage 19 et un atelier de démantelement des assemblages des combustibles irradiés 20. Après démantèlement, les aiguilles de combustible irradié sont acheminées vers une usine de retraitement 21.

4

Le réseau de voies de circulation comporte donc au niveau des bâtiments des installations communes, une branche 24 permettant le départ des assemblages neufs et une branche 25 permettant l'arrivée des assemblages irradiés.

Le circuit 7 ou chacun des circuits 14 et 16 comporte donc deux branches différentes permettant la circulation des assemblages irradiés ou la circulation des assemblages neufs.

Chacun de ces circuits comporte également des embranchements et des voies secondaires permettant le retour des véhicules servant au transfert des assemblages neufs ou irradiés, à vide, vers la zone de chargement des assemblages neufs ou vers le réacteur.

Suivant les conditions locales, on pourra choisir la disposition de la figure 1 où les 4 réacteurs sont disposés en parallèle ou la disposition de la figure 2 où les réacteurs sont disposés en ligne et opposés deux à deux.

A titre d'exemple, dans le cas d'un site comportant deux réacteurs on a représenté ces deux réacteurs 30 et 31 sur la figure 3 disposés en ligne et opposés avec un bâtiment des interventions spéciales 36 entre ces deux réacteurs, le bâtiment des installations communes 35 étant relié à chacun des réacteurs par un double réseau de voies de circulation 37 comportant des embranchements pour le retour des véhicules de transfert soit au bâtiment 35, soit aux réacteurs 30 et 31.

Comme dans le cas des dispositions à 4 réacteurs, le bâtiment des installations communes comporte une zone de stockage et de conditionnement des assemblages neufs 38, une zone de stockage des assemblages irradiés 39, une zone de démantèlement des assemblages irradiés 40 qui permet l'envoi du combustible vers une usine de retraitement 41.

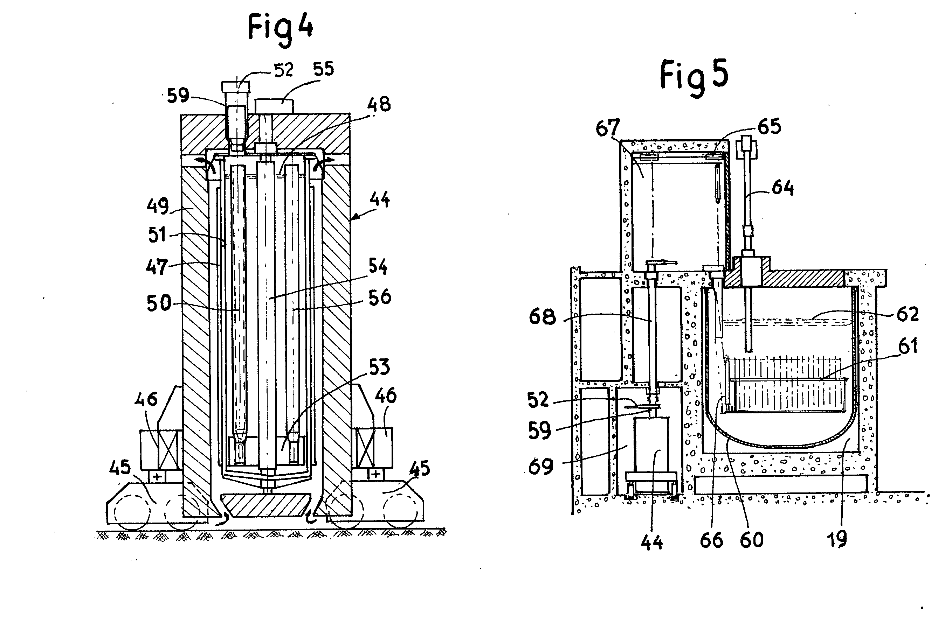

En se reportant à la figure 4, on voit un module de transfert 44 permettant le transfert des assemblages irradiés sur des voies de circulation telles que représentées sur les figures 1, 2 et 3 grace à deux bogies 45 sur lesquels repose un chassis commun 46 portant une cuve 47 remplie de sodium jusqu'à un niveau 48 servant de capacité pouvant contenir 6 assemblages combustibles tels que 50.

La cuve 47 comporte une double enveloppe 51 dans laquelle se trouve un fluide caloporteur, elle-même contenue dans une enveloppe de protection radiologique 49. Une vanne 52 disposée à la partie supérieure de l'enceinte permet d'isoler l'enceinte de l'atmosphère ou de mettre l'enceinte en communication avec les dispositifs de manutention des assemblages. A l'intérieur de l'enceinte est disposé un barillet 53 comportant un axe central 54 pour le support d'étuis 56 contenant les assemblages 50, reposant par leur partie inférieure sur le barillet 53. L'axe du barillet peut être entraîné en rotation par un moteur de commande de ce barillet 55 disposé à la partie supérieure du module du transport 44 et à l'extérieur de l'enceinte 47.

De cette façon, lorsque la vanne 52 est ouverte on peut amener successivement chacun des 6 étuis 56 renfermant un assemblage irradié 50 au niveau de la cheminée de sortie 59 du module de transport 44 ; pour son extraction de ce module.

Sur la figure 5, on voit la zone du bâtiment des installations communes comportant la zone de stockage des assemblages irradiés 19 à l'intérieur de laquelle une cuve 60 permet le stockage d'un grand nombre d'assemblages, par exemple le nombre d'assemblages correspondant au renouvellement annuel de 4 tranches disposées sur le site.

Cette capacité permet de desservir 4 tranches disposées sur le site telles que représentées sur les figures 1 et 2.

La cuve 60 renferme un support 61 qui permet le stockage des des assemblages, l'ensemble étant noyé dans du sodium liquide dont le niveau supérieur 62 a été représenté sur la figure 5.

Un organe de manutention 64 permet de déposer ou de prélever les assemblages dans le support 61, ces assemblages pouvant être amenés grace à un treuil 65 dans une zone 66 de la cuve 60, à partir de la zone intermédiaire 67 disposée à un niveau supérieur au niveau de la cuve.

La zone 67 communique par l'intermédiaire d'un conduit 68 avec un couloir de circulation 69 dans lequel un module 44 peut venir en position déterminée de façon que son conduit de sortie 59 vienne dans le prolongement du conduit 68.

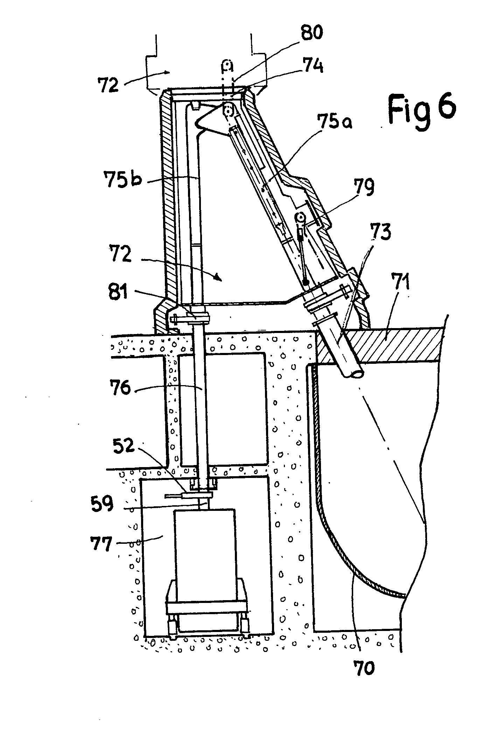

Sur la figure 6, on voit une partie de la cuve 70 du réacteur fermée par une dalle 71 au dessus de laquelle est disposé un sas à basculeurs 72 en communication avec une rampe 73 à l'intérieur de laquelle les assemblages combustibles peuvent être entraînés dans un chariot par un treuil 79, pour leur passage de la cuve 70 au sas à basculeurs et inversement du sas à basculeurs 72 à la cuve 70.

A l'intérieur du sas 72, une platine rotative 74 permet de faire passer les basculeurs 75 de la position 75 a où le basculeur est dans le prolongement de la rampe 73, à la position 75 b où le basculeur est dans le prolongement d'un conduit vertical 76 reliant le sas à basculeurs à la zone 77 de chargement et déchargement du module 44. Pour ce passage de la position 75 a à la position 75 b et inversement, le basculeur 75 subit une rotation autour d'un axe vertical et autour d'un axe horizontal.

Le treuil 79 permet de déplacer le chariot contenant les assemblages dans la rampe 73 et un second treuil 80 permet de déplacer les assemblages dans les basculeurs et le conduit vertical 76.

Une vanne 81 permet d'isoler le sas à basculeurs 72 du conduit 76.

Une voie de circulation des modules de transfert 44 débouche dans la zone de chargement et déchargement 77, si bien que les modules 44 peuvent être amenés en position de chargement lorsqu'ils arrivent à vide ou en position de déchargement, s'ils arrivent remplis d'assemblages neufs, dans la zone 77.

Le passage des assemblages irradiés de la cuve 70 au module 44 peut se faire directement sans passage par une capacité intermédiaire de stockage. On peut garnir un module 44 tel que décrit précédemment avec 6 assemblages irradiés prélevés dans la cuve du réacteur grace à la rampe 73 et au treuil 79, le barillet disposé dans le module 44 permettant de venir placer dans le prolongement des conduits 59 et 76, successivement, les 6 positions de stockage du combustible dans le module 44.

Lorsque le chargement des assemblages irradiés est terminé on ferme les vannes 52 et 81 et l'on sépare les conduits 59 et 76. Le module est alors libre de se déplacer sur sa voie de circulation, pour se rendre, par exemple en position de chargement au niveau de la capacité de stockage du bâtiment des installations communes telle que représentée à la figure 5.

Les assemblages irradiés peuvent alors être prélevés un par un dans le module 44 et déposés dans la capacité de stockage 60 grace à un treuil 65 et à l'organe de manutention 64. On peut également réaliser le stockage des assemblages irradiés dans les modules de transfert 44 eux-mêmes.

Après un certain temps de stockage de désactivation, les assemblages sont amenés dans l'atelier de démantèlement 40 où le démontage des aiguilles combustibles contenues dans les assemblages est effectué.

On place alors ces aiguilles combustibles dans des étuis étanches remplis de gaz pour leur expédition vers l'usine de retraitement.

On évite ainsi le transport d'assemblages complets et non démantelés à l'intérieur d'étuis de grandes dimensions eux-mêmes disposés à l'intérieur de chateaux de transport extrêmement lourds.

De préférence, l'usine de retraitement pourra être implantée sur le site lui-même ou sur un site voisin relié au premier site où se trouvent les réacteurs par des voies de circulation non accessibles au public.

Le chargement des modules de stockage et de transfert avec des combustibles neufs est effectué au niveau de la zone des assemblages neufs du bâtiment des installations communes, grace à des dispositifs de chargement semblables à ceux qui ont été décrits pour le combustible irradié. On peut utiliser les mêmes modules de transfert pour les assemblages neufs et pour les assemblages irradiés.

Ces modules de transfert devront comporter un dispositif de chauffage auxiliaire pour maintenir le sodium contenu dans l'enceinte du module à l'état liquide.

Le chargement des assemblages combustibles neufs dans le réacteur nucléaire se fait par le dispositif utilisé pour le déchargement des assemblages irradiés.

On voit que les principaux avantages du dispositif suivant l'invention sont de mettre en commun des installations relatives à la manutention du combustible irradié et du combustible neuf pour un ensemble de réacteurs, par exemple 2 ou 4 réacteurs. En particulier, la capacité de stockage commune à l'ensemble des réacteurs peut-être une source d'économies dans la conception des réacteurs.

Mais l'invention ne se limite pas aux modes de réalisation qui ont été décrits elle en comporte au contraire toutes les variantes.

C'est ainsi que les modules de transport peuvent avoir une capacité supérieure à celle des modules décrits qui contenaient 6 assemblages.

Ces modules peuvent être utilisés sans protection radiologique si le réseau des voies de communication passe à l'intérieur de tunnels isolant ces voies du milieu extérieur.

Au lieu d'un barillet tournant, l'enceinte des modules de transfert peut contenir un support fixe pour les assemblages. Dans ce cas la paroi supérieure de l'enceinte peut comporter un ensemble d'ouvertures obturables, à la verticale de chacune des positions occupées par les assemblages sur le support fixe.

Dans ce cas, on réalisera un déplacement relatif entre les moyens de préhension des assemblages et le module, aux postes de chargement ou de déchargement des modules.

La capacité de stockage prévue dans le bâtiment des installations communes n'est pas indispensable, si le nombre et la capacité des modules de transfert 44 sont suffisants pour que le stockage puisse être effectué dans les modules eux-mêmes.

A la sortie du réacteur, les assemblages irradiés peuvent être chargés immédiatement dans les modules ou au contraire déposés dans une capacité de stockage placée au voisinage de la cuve du réacteur, pour leur désactivation.

Enfin, le dispositif suivant l'invention peut être utilisé pour le stockage et le transport d'assemblages de réacteurs nucléaires qui ne sont pas des réacteurs à neutrons rapides. Ce dispositif est applicable toutes les fois où des réacteurs sont regroupés sur un même site et associés à des installations communes.

REVENDICATIONS

1.- Dispositif de transfert et de stockage d'assemblages combustibles pour réacteurs nucléaires à neutrons rapides sur un site où se trouvent au moins deux bâtiments réacteurs (1, 2, 3, 4) et au moins un bâtiment (5) renfermant des installations communes à ces deux réacteurs espacés d'une certaine distance, caractérisé par le fait qu'il comporte :
- des modules de transfert et de stockage (44) des assemblages combustibles comportant une enceinte (47) pouvant contenir plusieurs assemblages (50) portée par un véhicule de transport (45-46)
- un ensemble de voies de circulation des modules entre les bâtiments des réacteurs et les installations communes (7),
- des dispositifs de manutention associés à chacun des réacteurs pour faire passer les assemblages irradiés du réacteur à un module de transfert (44) disposé en position de chargement sur une voie desservant le réacteur et inversement pour faire passer les assemblages neufs depuis un module de transfert vers le réacteur,
- un atelier de démantèlement (20) des assemblages dans le bâtiment des installations communes (5),
et au moins un dispositif de manutention disposé dans le bâtiment des installations communes pour le chargement des modules en assemblages neufs.

2.- Dispositif de transfert et de stockage suivant la revendication 1, caractérisé par le fait qu'il comporte en outre :
- au moins une capacité de stockage (60) disposée dans le bâtiment des installations communes (5),
- et au moins un dispositif de manutention (64, 65) associé à la capacité de stockage (60), pour le passage des assemblages d'un module (44) en position déterminée sur une voie de circulation desservant le bâtiment des installations communes (5), à la capacité de stockage (60).

3.- Dispositif de transfert et de stockage suivant l'une quelconque des revendications 1 et 2, caractérisé par le fait que chacun des bâtiments réacteurs (1, 2, 3, 4) est relié au bâtiment des installations communes (5) par un double circuit de voies de communication (7).

**Fig 1**

**Fig 2**

**Fig 3**

# Fig 4

# Fig 5

Fig 6

**Office européen
des brevets**

**RAPPORT DE RECHERCHE EUROPEENNE**

EP 81 40 0188

Numéro de la demande

00034100

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | DE - A - 1 804 494 (A.P.C.)<br>* Page 3, dernier alinéa; page 4, alinéas 2,4; page 5, lignes 23-28; figures * | 1,2 | G 21 C 19/32 |
| | -- | | |
| | GB - A - 1 101 263 (U.K.A.E.A.)<br>* Page 2, lignes 47-63; fi-gures 1,2 * | 1 | |
| | -- | | |
| | FR - A - 1 552 304 (A.A.)<br>* Page 2, colonne de gauche, alinéa 8; colonne de droite, alinéas 1,2; figure 1 * | 1 | **DOMAINES TECHNIQUES RECHERCHES (Int. Cl.³)**<br><br>G 21 C 19/32<br>19/18<br>19/20<br>1/00 |
| | -- | | |
| | FR - A - 2 278 136 (C.E.A.)<br>* Page 5, dernier alinéa; figure 1 * | 2 | |
| | -- | | |
| A | FR - A - 1 575 750 (U.K.A.E.A.)<br>* Page 3, dernier alinéa; figures 1-3 * | 1 | |
| | -- | | **CATEGORIE DES DOCUMENTS CITES** |
| A | FR - A - 1 527 224 (C.E.A.)<br>* Figures 1,6 * | 1 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | ---- | | |
| | | | &: membre de la même famille, document correspondant |

| Le présent rapport de recherche a été établi pour toutes les revendications | | |
|---|---|---|
| Lieu de la recherche<br>La Haye | Date d'achèvement de la recherche<br>18-05-1981 | Examinateur<br>KAVCIC |

OEB Form 1503.1   06.78